# EUROPEAN PATENT SPECIFICATION

(11) **EP 2 660 128 B1**
(45) Date of publication and mention of the grant of the patent: **20.04.2016**
(21) Application number: 11853627.5
(22) Date of filing: 15.11.2011
(51) Int. Cl.: B62D 21/00, B62D 21/11

(54) **SUSPENSION FRAME STRUCTURE**
AUFHÄNGUNGSRAHMENSTRUKTUR
STRUCTURE DE CADRE DE SUSPENSION

(30) Priority: 27.12.2010 JP 2010290890
(43) Date of publication of application: 06.11.2013
(73) Proprietor: Futaba Industrial Co. Ltd., Okazaki-shi, Aichi 444-8558 (JP)
(72) Inventor: KUBOZONO, Satoshi, Okazaki-shi Aichi 444-8558 (JP)
(74) Representative: Johnson, Yvonne Catherine
(86) International application number: PCT/JP2011/076293
(87) International publication number: WO 2012/090608

(56) References cited:
- DE-A1-102009 034 860
- JP-A- 2000 344 130
- JP-A- 2002 114 170
- JP-A- 2002 321 639
- JP-A- 2002 321 639
- JP-A- 2002 370 670
- JP-A- 2008 001 307
- JP-A- 2008 001 307
- JP-U- 61 128 177
- JP-U- 63 154 390

## Description

### TECHNICAL FIELD

The present invention relates to a suspension frame structure for a vehicle formed by overlapping an upper plate and a lower plate.

### BACKGROUND ART

In a conventional suspension frame structure according to Patent Document 1, an upper plate and a lower plate are overlapped with each other to form a member body of a hollow shape. To left and right of the front side of the member body, and to left and right of the rear side of the member body, lower arms are swingably mounted. A front edge of the member body is formed in an arched shape. More specifically, the front edge of the member body has a configuration in which a portion between two arm mounting portions disposed on the left and right of the front side of the member body is located at a rear of a straight line connecting the arm mounting portions on the left and right of the front side. Such a configuration is intended to secure a region where a part of an engine is to be disposed.

### PRIOR ART DOCUMENTS

### PATENT DOCUMENTS

Patent Document 1: Japanese Unexamined Patent Application Publication No. 2008-001307

### SUMMARY OF THE INVENTION

### PROBLEMS TO BE SOLVED BY THE INVENTION

In the suspension frame structure as described above, an external force in a vehicle width direction acts on the member body, via the lower arms, from the arm mounting portions on the left and right of the front side. However, in the conventional suspension frame structure configured as such, a plate material having a thick plate thickness has to be used for a lower plate and/or an upper plate in order to secure rigidity, due to a configuration in which the front edge of the member body is formed in an arched shape (in other words, due to a configuration in which the front edge of the member body is made offset to a rear of the straight line connecting the arm mounting portions). This has resulted in a problem that the suspension frame structure is heavier in weight. In addition, there has been a problem that this causes a cost increase.

It is preferable to provide a suspension frame structure that is more lightweight and less expensive.

### MEANS FOR SOLVING THE PROBLEMS

The solution for the above problem is defined by the combination of features set out in claim 1. A suspension frame structure of the present invention is a suspension frame structure for a vehicle including: a member body formed by joining at least an upper plate and a lower plate together; and front-side arm mounting portions, which are respectively provided on left and right of a front side of the member body and to which a pair of left and right lower arms, respectively, is to be mounted. The suspension frame structure is characterized by having a configuration in which a front edge of the member body is located in front of a line connecting the front-side arm mounting portions.

The lower plate may be formed in a shape of an approximately flat plate. A front edge of the lower plate may be located in front of the line connecting the front-side arm mounting portions. A front edge of the upper plate may be located at a rear of the front edge of the lower plate. In the upper plate, a cross-sectional shape thereof when sectioned with a section line extending in a front-back direction may be formed in an approximately U shape, and the lower plate and the upper plate may be joined to each other to form a hollow portion. The front-side arm mounting portions may be provided on the upper plate. The upper plate may be formed in an approximately arched shape in such a manner that the closer to a center between the front-side arm mounting portions a portion is, the more rearward such a portion is located. The front edge of the lower plate may be bent. Rear-side arm mounting portions to hold rear end portions of the lower arms may be respectively provided on left and right of a rear side of the member body.

### EFFECTS OF THE INVENTION

In the suspension frame structure of the present invention, since the front edge of the member body is formed in front of the line connecting the front-side arm mounting portions, high rigidity against an external force acting on the front-side arm mounting portions in a vehicle width direction can be obtained. Therefore, even when a plate thickness is reduced, required rigidity can be secured. This makes it possible to seek weight reduction as well as cost reduction.

Moreover, to form the lower plate in a shape of an approximately flat plate and to configure the lower plate in such a manner that the front edge of the lower plate is located in front of the line connecting the arm mounting portions make it easier to press-form the lower plate and make it possible to make the lower plate lighter in weight. Furthermore, to configure the front edge of the upper plate to be located at a rear of the front edge of the lower plate, to configure the lower plate and the upper plate to be joined to each other to form a hollow portion, and to form the upper plate (i.e., the front edge of the upper plate) in an approximately arched shape in such a manner that the closer to the center of the upper plate a portion is, the more rearward such a portion is located make it possible to secure rigidity against bending, twisting, or the like. In addition, even when the lower plate is formed in a shape of an approximately flat plate, rigidity can be secured by bending the front edge of the lower plate.

### BRIEF DESCRIPTION OF THE DRAWINGS

FIG. 1 is a perspective view of a suspension frame structure according to the present embodiment with lower arms mounted thereto.
FIG. 2 is a plan view of the suspension frame structure according to the present embodiment.
FIG. 3 is a rear view of the suspension frame structure according to the present embodiment.
FIG. 4 is a cross-sectional view taken along a line IV-IV in FIG. 1.

### EXPLANATION OF REFERENCE NUMERALS

1... member body, 2... upper plate, 4... lower plate, 4a... front edge, 6, 8... side plate, 10, 12...front-side arm mounting portion, 14, 16... rear-side arm mounting portion, 18, 20... lower arm, 24... supporting shaft, 26, 28... rear-side supporting portion, 30, 32... vehicle body mounting member

### MODE FOR CARRYING OUT THE INVENTION

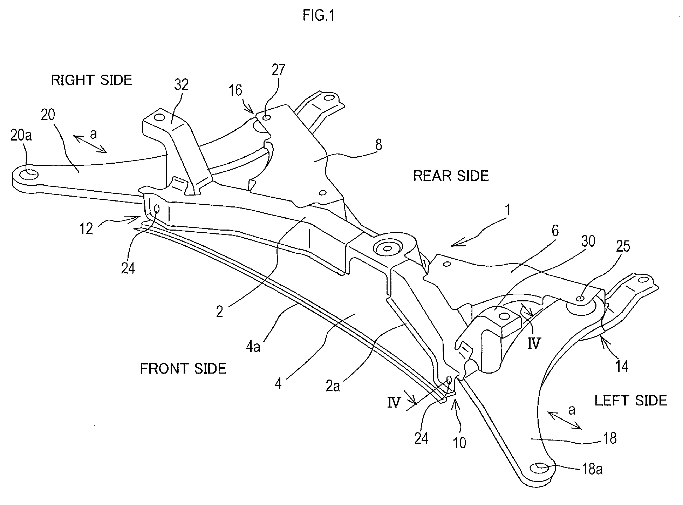

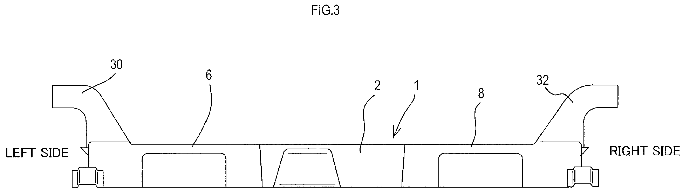

Hereinafter, an embodiment for carrying out the present invention will be described in detail with reference to the drawings. As shown in FIGS. 1 to 3, a member body 1 is formed by overlapping an upper plate 2 and a lower plate 4 vertically with each other. The upper plate 2 and the lower plate 4 are both formed by pressing, and the upper plate 2 has flange portions 2a and 2b horizontally formed on a front side and a rear side, respectively, of a vehicle.

The flange portions 2a and 2b of the upper plate 2 can be overlapped with the lower plate 4. When the upper plate 2 and the lower plate 4 are joined together, a hollow portion is formed. Moreover, the member body 1 includes, on left and right of the rear side thereof, side plates 6 and 8, respectively, each of which lies astride the upper plate 2 and the lower plate 4 in a vertically overlapped manner.

The member body 1 includes, on left and right ends of the front side thereof, front-side arm mounting portions 10 and 12, respectively. Furthermore, the member body 1 includes, on left and right ends of the rear side thereof, rear-side arm mounting portions 14 and 16, respectively. To each of the front-side arm mounting portions 10 and 12, one end of a pair of left and right lower arms 18 and 20, respectively, is swingably coupled about a supporting shaft 24 extending in an approximately front-back direction.

To each of the rear-side arm mounting portions 14 and 16, another end of the pair of left and right lower arms 18 and 20, respectively, is swingably coupled about vertical shafts 25 and 27, respectively, via a rubber bushing (not shown). Mounted into respective mounting holes 18a and 20a of the pair of left and right lower arms 18 and 20 are knuckles that rotatably support wheels (not shown) via ball joints (not shown).

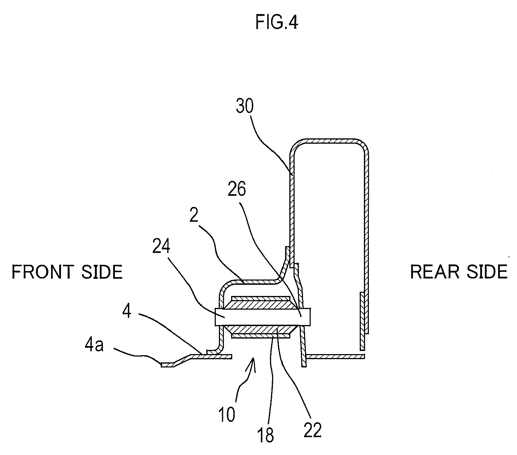

In the front-side arm mounting portion 10, as shown in FIG. 4, one end of the lower arm 18 is swingably supported about the supporting shaft 24 extending in the approximately front-back direction via a rubber bushing 22. The supporting shaft 24 is supported by the member body 1 (specifically, the upper plate 2). The front-side arm mounting portion 12 is configured in a similar manner.

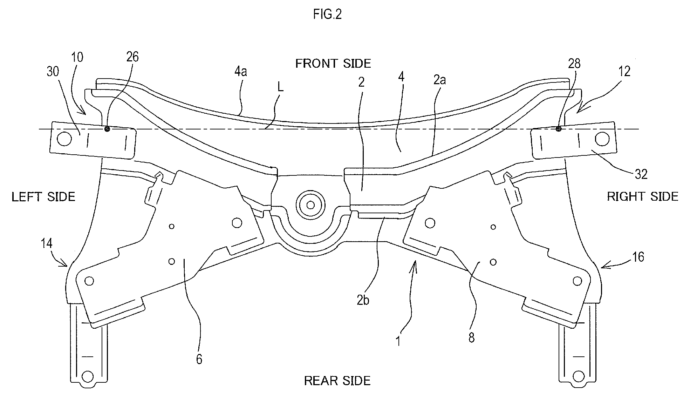

A straight line, which passes through a rear part of the front-side arm mounting portion 10 (e.g., a rear-side supporting portion 26 supporting a rear end from among both ends of the supporting shaft 24) and a rear-side supporting portion 28 (see FIG. 2) in the front-side arm mounting portion 12, is referred to as a limit line L as shown in FIG. 2.

The front edge 4a of the member body 1 is formed so as to be located in front of the limit line L. In the present embodiment, the lower plate 4 is formed in a shape of an approximately flat plate, which is substantially flat therethroughout. The lower plate 4 is formed by pressing. As shown in FIG. 4, a front edge 4a of the lower plate 4 is bent downward to thereby enable the lower plate 4 to have improved rigidity.

On the other hand, the front edge 2a of the upper plate 2 is located at a rear of the front edge 4a of the lower plate 4 and the limit line L. In the upper plate 2, a cross-sectional shape thereof is formed in an approximately U shape. The upper plate 2 and the lower plate 4 are joined to each other by overlapping the upper plate 2 with the lower plate 4, with an opening side of the upper plate 2 facing downward. As a result, a hollow portion is formed in the member body 1. Specifically, in a cross-sectional view when the member body 1 is sectioned with a section line extending in a front-back direction, the hollow portion (a portion having a cavity inside) exists.

The upper plate 2 is formed between and across the front-side arm mounting portions 10 and 12 on the left and right of the front side, respectively, and the front edge 2a of the upper plate 2 is formed in an approximately arched shape. Specifically, the front edge 2a of the upper plate 2 is formed in such a manner that the closer to a center between the front-side arm mounting portions 10 and 12 a portion is, the more rearward such a portion is located. The upper plate 2 may be formed by welding or the like of a plurality of members.

A portion, on the lower plate 4, located in front of the front edge 2a of the upper plate 2 is formed substantially flat, and an engine (not shown) is disposed on the flat portion. The front edge 4a of the lower plate 4 is disposed below the engine.

In the member body 1, on rear sides of the front-side arm mounting portions 10 and 12, a pair of left and right vehicle body mounting members 30 and 32, respectively, is provided in an upwardly extending manner.

In this manner, since the front edge of the member body 1 (specifically, the front edge 4a of the lower plate 4 in the present embodiment) is so provided as to be located in front of the limit line L, high rigidity is obtained against an external force in a vehicle width direction (a direction shown by an arrow, "a" in FIG. 1) acting on the front-side arm mounting portions 10 and 12 on the left and right of the front side, respectively. Accordingly, even when a plate thickness of the upper plate 2 and/or the lower plate 4 is reduced, required rigidity can be secured. This makes it possible to seek weight reduction as well as cost reduction of the suspension frame structure.

Moreover, to form the lower plate 4 in a shape of an approximately flat plate makes it easier to press-form the lower plate 4. Furthermore, rigidity against bending, twisting, or the like can also be secured by providing the front edge 2a of the upper plate 2 at a rear of the front edge 4a of the lower plate 4 and by forming the cross-sectional shape in a hollow shape, as well as by forming the upper plate 2 between and across the front-side arm mounting portions 10 and 12, and in an approximately arched shape with its center located at a rear of the front-side arm mounting portions 10 and 12 on the left and right, respectively, of the front side. In addition, even when the lower plate 4 is formed in a shape of an approximately flat plate, rigidity can be secured by bending the front edge 4a of the lower plate 4.

## Claims

1. A suspension frame structure for a vehicle, the structure comprising:
a member body (1) formed by joining at least an upper plate (2) and a lower plate (4) together; and
front-side arm mounting portions (10, 12), which are respectively provided on left and right of a front side of the member body (1) and to which a pair of left and right lower arms (20), respectively, is to be mounted,
wherein a straight line, which passes through a rear part of the front-side arm mounting portion (10) and a rear-side supporting portion (28) in the front-side arm mounting portion (12) is referred to as a limit line L, and
the front edge (4a) of the member body (1) is formed so as to be located in front of the limit line L and the front edge of the upper plate (2) is located at a rear of the front edge (4a) of the lower plate (4) and the limit line L.

2. The suspension frame structure according to claim 1, wherein the lower plate (4) is formed in a shape of an approximately flat plate.

3. The suspension frame structure according to claim 2, wherein a front edge of the upper plate (2) is located at a rear of the front edge of the lower plate (4).

4. The suspension frame structure according to claim 3, wherein, in the upper plate (2), a cross-sectional shape thereof when sectioned with a section line extending in a front-back direction is formed in an approximately U shape, and the lower plate (4) and the upper plate (2) are joined to each other to form a hollow portion.

5. The suspension frame structure according to claim 3, wherein the front-side arm mounting portions (10, 12) are provided on the upper plate (2).

6. The suspension frame structure according to claim 5, wherein the upper plate (2) is formed in an approximately arched shape in such a manner that the closer to a center between the front-side arm mounting portions (10, 12) a portion is, the more rearward such a portion is located.

7. The suspension frame structure according to any of claims 1 to 6, wherein the front edge of the lower plate (4) is bent.

8. The suspension frame structure according to claim 1, wherein rear-side arm mounting portions (14, 16) to hold rear end portions of the lower arms (20) are respectively provided on left and right of a rear side of the member body (1).

## Patentansprüche

1. Eine Aufhängungsrahmenstruktur für ein Fahrzeug, die Struktur weist dabei Folgendes auf:
einen Teile-Aufbau (1), der durch das Zusammenfügen mindestens einer Oberplatte (2) und einer Unterplatte (4) gebildet wird; und
Vorderseiten-Arm-Aufhängungs-Teile (10, 12), die jeweils links und rechts an einer Vorderseite des Teile-Aufbaus (1) angebracht sind und an die ein Paar unterer linker bzw. rechter Arme (20) montiert werden muss,
wobei eine gerade Linie, die durch einen hinteren Teil des Vorderseiten-Arm-Aufhängungs-Teils (10) und einen Rückseiten-Stütz-Teil (28) im Vorderseiten-Arm-Aufhängungs-Teil (12) verläuft, als Grenzlinie L bezeichnet wird, und
die Vorderkante (4a) des Teile-Aufbaus (1) so geformt ist, dass sie vor der Grenzlinie L liegt, und die Vorderkante der Oberplatte (2) an einer Rückseite der Vorderkante (4a) der Unterplatte (4) und der Grenzlinie L liegt.

2. Die Aufhängungsrahmenstruktur gemäß Anspruch 1, wobei die Unterplatte (4) die Form einer annähernd geraden Platte hat.

3. Die Aufhängungsrahmenstruktur gemäß Anspruch 2, wobei eine Vorderkante der Oberplatte (2) an einer Rückseite der Vorderkante der Unterplatte (4) liegt.

4. Die Aufhängungsrahmenstruktur gemäß Anspruch 3, wobei, an der Oberplatte (2), eine Querschnittsform, wenn sie von einer Abschnittslinie durchschnitten wird, die sich in einer Vorderseiten-Rückseiten-Richtung erstreckt, in einer annähernden U-Form gebildet wird, und die Unterplatte (4) und die Oberplatte (2) zusammengefügt werden, um einen Hohlraum-Teil zu bilden.

5. Die Aufhängungsrahmenstruktur gemäß Anspruch 3, wobei die Vorderseiten-Arm-Aufhängungs-Teile (10, 12) an der Oberplatte (2) angebracht sind.

6. Die Aufhängungsrahmenstruktur gemäß Anspruch 5, wobei die Oberplatte (2) eine annähernde Bogenform hat, so dass je näher ein Teil einer Mitte zwischen den Vorderseiten-Arm-Aufhängungs-Teilen (10, 12) ist, desto mehr ein solches Teil nach hinten verlagert ist.

7. Die Aufhängungsrahmenstruktur gemäß eines der Ansprüche 1 bis 6, wobei die Vorderkante der Unterplatte (4) gebogen ist.

8. Die Aufhängungsrahmenstruktur gemäß Anspruch 1, wobei die Rückseiten-Arm-Aufhängungs-Teile (14, 16), zum Halten der Rückseiten-End-Teile der unteren Arme (20), jeweils links und rechts an der Rückseite des Teile-Aufbaus (1) befestigt sind.

## Revendications

1. Une structure de cadre de suspension pour un véhicule, la structure comprenant :
un corps d'élément (1) formé par l'assemblage d'au moins une plaque supérieure (2) et une plaque inférieure (4), et
des sections de montage de bras côté avant (10, 12) qui sont respectivement placées sur la gauche et la droite d'un côté avant du corps d'élément (1) et sur lesquelles une paire de bras inférieurs droit et gauche (20), respectivement, doivent être montés,
où une ligne droite, qui passe au travers d'une partie arrière de la section de montage de bras côté avant (10) et d'une section d'appui côté arrière (28) dans la section de montage de bras côté avant (12), est appelée ligne de limite L, et
le bord avant (4a) du corps d'élément (1) est formé de façon à être situé devant la ligne de limite L, et le bord avant de la plaque supérieure (2) est situé au niveau d'un arrière du bord avant (4a) de la plaque inférieure (4) et de la ligne de limite L.

2. La structure de cadre de suspension selon la Revendication 1, où la plaque inférieure (4) est formée selon une forme d'une plaque approximativement plane.

3. La structure de cadre de suspension selon la Revendication 2, où un bord avant de la plaque supérieure (2) est situé au niveau d'un arrière du bord avant de la plaque inférieure (4).

4. La structure de cadre de suspension selon la Revendication 3, où, dans la plaque supérieure (2), une forme en section transversale de celle-ci, lorsqu'elle est coupée par une ligne de section s'étendant dans une direction avant-arrière, est formée selon une forme approximativement en U, et la plaque inférieure (4) et la plaque supérieure (2) sont assemblées l'une à l'autre de façon à former une section creuse.

5. La structure de cadre de suspension selon la Revendication 3, où les sections de montage de bras côté avant (10, 12) sont placées sur la plaque supérieure (2).

6. La structure de cadre de suspension selon la Revendication 5, où la plaque supérieure (2) est formée selon une forme approximativement arquée de sorte que plus une section est proche d'un centre entre les sections de montage de bras côté avant (10, 12), plus cette section est située vers l'arrière.

7. La structure de cadre de suspension selon l'une quelconque des Revendications 1 à 6, où le bord avant de la plaque inférieure (4) est courbé.

8. La structure de cadre de suspension selon la Revendication 1, où des sections de montage de bras côté arrière (14, 16) destinées à maintenir des sections d'extrémité arrière des bras inférieurs (20) sont respectivement placées sur la gauche et la droite d'un côté arrière du corps d'élément (1 ).
